(19) Europäisches Patentamt / European Patent Office / Office européen des brevets

(11) **EP 4 184 699 A2**

(12) **EUROPEAN PATENT APPLICATION**
published in accordance with Art. 153(4) EPC

(43) Date of publication:
**24.05.2023 Bulletin 2023/21**

(21) Application number: **22742927.1**

(22) Date of filing: **25.01.2022**

(51) International Patent Classification (IPC):
$H01M\ 50/446^{(2021.01)}$    $H01M\ 50/449^{(2021.01)}$
$H01M\ 50/489^{(2021.01)}$    $H01M\ 10/052^{(2010.01)}$

(52) Cooperative Patent Classification (CPC):
**H01M 50/446;** Y02E 60/10

(86) International application number:
**PCT/KR2022/001334**

(87) International publication number:
**WO 2022/158951 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.01.2021 KR 20210010310**

(71) Applicant: **Lg Chem, Ltd.**
**Seoul 07336 (KR)**

(72) Inventors:
• **LEE, Joo-Sung**
  **Daejeon 34122 (KR)**
• **RYU, Bi-Oh**
  **Daejeon 34122 (KR)**
• **JUNG, Kil-An**
  **Daejeon 34122 (KR)**

(74) Representative: **Hoffmann Eitle**
**Patent- und Rechtsanwälte PartmbB**
**Arabellastraße 30**
**81925 München (DE)**

(54) **SEPARATOR FOR LITHIUM SECONDARY BATTERY AND LITHIUM SECONDARY BATTERY COMPRISING SAME**

(57)    The present disclosure relates to a separator having excellent safety and a lithium secondary battery including the same. The separator includes: a porous polymer substrate; and an organic/inorganic composite porous layer disposed on at least one surface of the porous polymer substrate and including inorganic particles and a binder polymer, wherein the inorganic particles have a BET specific surface area of 50-150 $m^2$/g, the organic/inorganic composite porous layer has a thickness larger than the thickness of the porous polymer substrate, and the surface of the organic/inorganic composite porous layer has an arithmetic mean roughness of 100-500 nm.

FIG. 1

EP 4 184 699 A2

**Description**

TECHNICAL FIELD

The present application claims priority to Korean Patent Application No. 10-2021-0010310 filed on January 25, 2021 in the Republic of Korea.

The present disclosure relates to a separator for a lithium secondary battery and a lithium secondary battery including the same. Particularly, the present disclosure relates to a separator for a lithium secondary battery having improved safety and a lithium secondary battery including the same.

BACKGROUND ART

Recently, energy storage technology has been given an increasing attention. As the application of energy storage technology has been extended to energy for cellular phones, camcorders and notebook PCs and even to energy for electric vehicles, there has been an increasing need for providing batteries used as power sources for such electronic devices with high energy density. Lithium secondary batteries are those satisfying such a need best. Therefore, active studies have been conducted about such lithium secondary batteries.

Such a lithium secondary battery includes a positive electrode, a negative electrode, an electrolyte and a separator. Particularly, it is required for the separator to be provided with insulation property for separating and electrically insulating the positive electrode and the negative electrode from each other and high ion conductivity for increasing lithium ion permeability based on high porosity.

A polyolefin separator using a porous substrate made of polyolefin has been used widely as such a separator. However, in the case of a polyethylene (PE) separator as a typical polyolefin separator, it has a low melting point (Tm). Thus, when the temperature of a battery is increased to a temperature equal to or higher than the melting point of polyethylene in the environment of abnormal use of a battery, a meltdown phenomenon occurs to cause ignition and explosion undesirably.

Several attempts have been made to reinforce the safety of such a polyolefin separator.

DISCLOSURE

Technical Problem

The present disclosure is designed to solve the problems of the related art, and therefore the present disclosure is directed to providing a separator for a lithium secondary battery having improved safety and a lithium secondary battery including the same.

Technical Solution

In one aspect of the present disclosure, there is provided a separator for a lithium secondary battery according to any one of the following embodiments.

According to the first embodiment, there is provided a separator for a lithium secondary battery including:

a porous polymer substrate; and
an organic/inorganic composite porous layer disposed on at least one surface of the porous polymer substrate and including inorganic particles and a binder polymer,
wherein the inorganic particles have a BET specific surface area of 50-150 $m^2/g$, the organic/inorganic composite porous layer has a thickness larger than the thickness of the porous polymer substrate, and the surface of the organic/inorganic composite porous layer has an arithmetic mean roughness of 100-500 nm.

According to the second embodiment, there is provided the separator for a lithium secondary battery as defined in the first embodiment, wherein the inorganic particles have a BET specific surface area of 50-130 $m^2/g$.

According to the third embodiment, there is provided the separator for a lithium secondary battery as defined in the first or the second embodiment, wherein the inorganic particles have a BET specific surface area of 50-75 $m^2/g$.

According to the fourth embodiment, there is provided the separator for a lithium secondary battery as defined in any one of the first to the third embodiments, wherein the surface of the organic/inorganic composite porous layer has an arithmetic mean roughness of 150-350 nm.

According to the fifth embodiment, there is provided the separator for a lithium secondary battery as defined in any one of the first to the fourth embodiments, wherein the thickness of the organic/inorganic composite porous layer is 1.01-5 times of the thickness of the porous polymer substrate.

According to the sixth embodiment, there is provided the separator for a lithium secondary battery as defined in any one of the first to the fifth embodiments, wherein the thickness of the organic/inorganic composite porous layer is 1.01-3 times of the thickness of the porous polymer substrate.

According to the seventh embodiment, there is provided the separator for a lithium secondary battery as defined in any one of the first to the sixth embodiments, wherein the inorganic particles have an average particle diameter (D50) of 20-47 nm.

According to the eighth embodiment, there is provided the separator for a lithium secondary battery as defined in any one of the first to the seventh embodiments, wherein the inorganic particles have an average particle diameter (D50) of 23-30 nm.

According to the ninth embodiment, there is provided the separator for a lithium secondary battery as defined in any one of the first to the eighth embodiments, wherein the inorganic particles include fumed inorganic particles.

According to the tenth embodiment, there is provided the separator for a lithium secondary battery as defined in the ninth embodiment, wherein the inorganic particles include fumed alumina, fumed silica, fumed titanium dioxide, or two or more of them.

According to the eleventh embodiment, there is provided the separator for a lithium secondary battery as defined in any one of the first to the tenth embodiments, wherein the organic/inorganic composite porous layer has a thickness of 5-15 $\mu$m.

According to the twelfth embodiment, there is provided the separator for a lithium secondary battery as defined in any one of the first to the eleventh embodiments, wherein the porous polymer substrate has a thickness of 3-10 $\mu$m.

According to the thirteenth embodiment, there is provided the separator for a lithium secondary battery as defined in any one of the first to the twelfth embodiments, wherein the separator has a total thickness of 8-25 $\mu$m.

According to the fourteenth embodiment, there is provided the separator for a lithium secondary battery as defined in any one of the first to the thirteenth embodiments, wherein the weight ratio of the inorganic particles to the binder polymer is 50:50-99.5:0.5.

According to the fifteenth embodiment, there is provided the separator for a lithium secondary battery as defined in any one of the first to the fourteenth embodiments, wherein the weight ratio of the inorganic particles to the binder polymer is 70:30-97:3.

According to the sixteenth embodiment, there is provided the separator for a lithium secondary battery as defined in any one of the first to the fifteenth embodiments, wherein the organic/inorganic composite porous layer has a weight of 50-99 wt% based on the total weight of the separator.

According to the seventeenth embodiment, there is provided the separator for a lithium secondary battery as defined in any one of the first to the sixteenth embodiments, wherein the separator shows a ratio of the light transmission after being allowed to stand at 25°C for 1 hour based on the light transmission after being allowed to stand at 190°C for 1 hour of 1.2 or more.

According to the eighteenth embodiment, there is provided the separator for a lithium secondary battery as defined in any one of the first to the seventeenth embodiments, wherein the separator shows a heat shrinkage of 10% or less, each in the machine direction (MD) and the transverse direction (TD), as measured after allowing the separator to stand at 190°C for 1 hour.

In another aspect of the present disclosure, there is provided a lithium secondary battery according to the following embodiment.

According to the nineteenth embodiment, there is provided a lithium secondary battery which includes an electrode assembly including a positive electrode, a negative electrode and a separator interposed between the positive electrode and the negative electrode, wherein the separator is the same as defined in any one of the first to the eighteenth embodiments.

Advantageous Effects

The separator for a lithium secondary battery according to an embodiment of the present disclosure includes a porous polymer substrate capable of shutdown at a low temperature of 140°C or less, and thus can ensure the safety against overcharge.

The separator for a lithium secondary battery according to an embodiment of the present disclosure includes inorganic particles having a BET specific surface area of 50-150 m$^2$/g, and thus shows excellent heat resistance.

The separator for a lithium secondary battery according to an embodiment of the present disclosure includes an organic/inorganic composite porous layer having a larger thickness than the thickness of a porous polymer substrate, and thus can prevent or reduce an internal short-circuit and thermal runaway of a battery caused by nail penetration.

The separator for a lithium secondary battery according to an embodiment of the present disclosure includes an organic/inorganic composite porous layer, the surface of which has an arithmetic mean roughness of 100-500 nm, and thus provides a battery with improved life characteristics.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

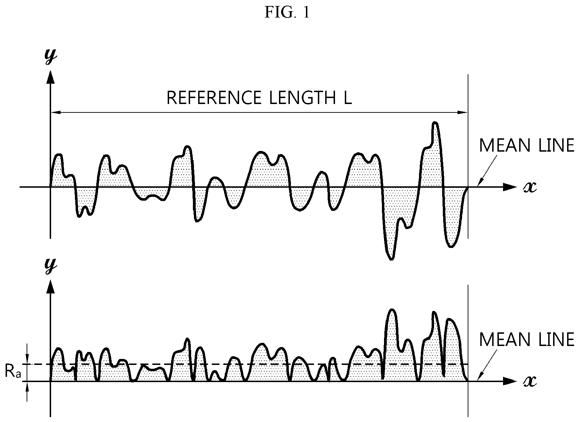

FIG. 1 is a diagram showing a roughness curve when calculating an arithmetic mean roughness.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In one aspect of the present disclosure, there is provided a separator for a lithium secondary battery including:

a porous polymer substrate; and
an organic/inorganic composite porous layer disposed on at least one surface of the porous polymer substrate and including inorganic particles and a binder polymer,
wherein the inorganic particles have a BET specific surface area of 50-150 $m^2$/g, the organic/inorganic composite porous layer has a thickness larger than the thickness of the porous polymer substrate, and the surface of the organic/inorganic composite porous layer has an arithmetic mean roughness of 100-500 nm.

The separator for a lithium secondary according to an embodiment of the present disclosure is provided with a porous polymer substrate. The porous polymer substrate may cause pore blocking (shutdown), when the temperature of a battery is increased due to an abnormal response of the battery. In this manner, it is possible to prevent the problems of ignition and explosion of the battery caused by overcharge.

According to an embodiment of the present disclosure, the porous polymer substrate is not particularly limited, as long as it may be used generally as a material for a separator for a lithium secondary battery. The porous polymer substrate may be a thin film including a polymeric material, and non-limiting examples of such a polymeric material include at least one selected from polymer resins, such as polyolefin resin, polyethylene terephthalate, polybutylene terephthalate, polyacetal, polyamide, polycarbonate, polyimide, polyetherether ketone, polyether sulfone, polyphenylene oxide, polyphenylene sulfide, and polyethylene naphthalene. In addition, the porous polymer substrate may include a non-woven fabric or a porous polymer film made of such a polymeric material, or a laminate of two or more layers thereof. Particularly, the porous polymer substrate is any one of the following a) to e):

a) A porous film formed by melting and extruding a polymer resin;
b) A multilayer film formed by stacking two or more layers of the porous films of a);
c) A non-woven fabric formed by integrating filaments obtained by melting/spinning a polymer resin;
d) A multilayer film formed by stacking two or more layers of the non-woven fabrics of c); and
e) A multilayered porous film including two or more of a) to d).

According to an embodiment of the present disclosure, although there is no particular limitation in the pore size and porosity of the porous polymer substrate, the pore size may be 0.01-0.09 $\mu$m, and the porosity may be 10-95%.

According to an embodiment of the present disclosure, the porosity and pore size of the porous polymer substrate may be determined from scanning electron microscopic (SEM) images, by using a mercury porosimeter or capillary flow porosimeter, or through the BET6-point method based on nitrogen gas adsorption flow using a porosimetry analyzer (e.g. Belsorp-II mini, Bell Japan Inc.).

The separator for a lithium secondary battery according to an embodiment of the present disclosure is provided with an organic/inorganic composite porous layer on at least one surface of the porous polymer substrate.

The organic/inorganic composite porous layer includes inorganic particles and a binder polymer which attaches the inorganic particles to one another so that they may retain their binding states (i.e. the binder polymer interconnects and fixes the inorganic particles), and the inorganic particles may be bound to the porous polymer substrate by the binder polymer. The organic/inorganic composite porous layer prevents the porous polymer substrate from undergoing severe heat shrinking behavior, and thus can improve the safety of the separator.

According to an embodiment of the present disclosure, the organic/inorganic composite porous layer may be disposed on both surfaces of the porous polymer substrate. When the organic/inorganic composite porous layer is disposed on both surfaces of the porous polymer substrate, it is possible to easily prevent the separator from being rolled in one direction due to the curling at one side of the porous polymer substrate where the organic/inorganic composite porous layer is not disposed.

According to the present disclosure, the inorganic particles have a BET specific surface area of 50-150 $m^2/g$. When the BET specific surface area of the inorganic particles is 50-150 $m^2/g$, the inorganic particles may be distributed more densely per unit area of the separator, thereby providing the separator with improved thermal safety.

In addition, upon the nail penetration, the inorganic particles contained in the organic/inorganic composite porous layer may surround the nail to prevent a direct short-circuit between a positive electrode and a negative electrode.

Further, when the BET specific surface area of the inorganic particles satisfies the above-defined range, the pore size of the organic/inorganic composite porous layer containing the inorganic particles may be 100 nm or less corresponding to the pore size of the porous polymer substrate. Therefore, it is possible to realize pore uniformity in the thickness direction of the separator.

When the BET specific surface area of the inorganic particles is less than 50 $m^2/g$, it is difficult to ensure the thermal safety of the separator, and it is also difficult to ensure nail penetration safety, since the inorganic particles cannot surround the nail. In addition, the pore size of the organic/inorganic composite porous layer containing the inorganic particles becomes larger than 100 nm, and thus the battery shows a high self-discharge rate, and excessive current leakage occurs upon the full charge, thereby making it difficult to realize a profound charge depth.

When the BET specific surface area of the inorganic particles is larger than 150 $m^2/g$, the pores among the inorganic particles becomes excessively narrow to cause a decrease in ion conductivity, and thus it is difficult to realize quick charging and high-rate discharging of the lithium secondary battery including the separator.

According to an embodiment of the present disclosure, the BET specific surface area of the inorganic particles may be 51 $m^2/g$ or more, 56 $m^2/g$ or more, 57 $m^2/g$ or more, 60 $m^2/g$ or more, 65 $m^2/g$ or more, 70 $m^2/g$ or more, 75 $m^2/g$ or more, 80 $m^2/g$ or more, 90 $m^2/g$ or more, 100 $m^2/g$ or more, 110 $m^2/g$ or more, 115 $m^2/g$ or more, or 120 $m^2/g$ or more, and 130 $m^2/g$ or less, 120 $m^2/g$ or less, 115 $m^2/g$ or less, 110 $m^2/g$ or less, 100 $m^2/g$ or less, 90 $m^2/g$ or less, 80 $m^2/g$ or less, 75 $m^2/g$ or less, 70 $m^2/g$ or less, 65 $m^2/g$ or less, 60 $m^2/g$ or less, 57 $m^2/g$ or less, or 56 $m^2/g$ or less. When the BET specific surface area of the inorganic particles satisfies the above-defined range, it is possible to ensure the thermal dimensional safety and nail penetration safety of the separator with ease. Particularly, when the BET specific surface area of the inorganic particles is 50-75 $m^2/g$, it is possible to ensure the dispersion stability of the inorganic particles, even when an excessive amount of dispersant is not used during the dispersion of the inorganic particles.

The BET specific surface area of the inorganic particles may be determined by the method of ASTM C1069.

According to an embodiment of the present disclosure, the inorganic particles may have an average particle diameter (D50) of 20 nm or more, 23 nm or more, 24 nm or more, 30 nm or more, or 39 nm or more, and 47 nm or less, 40 nm or less, 39 nm or less, 30 nm or less, 24 nm or less, or 23 nm or less. When the average particle diameter of the inorganic particles satisfies the above-defined range, the inorganic particles may be distributed more densely per unit area of the separator, thereby providing the separator with improved thermal safety.

In addition, upon the nail penetration, the inorganic particles contained in the organic/inorganic composite porous layer may surround the nail to prevent a direct short-circuit between a positive electrode and a negative electrode.

Further, the pore size of the organic/inorganic composite porous layer containing the inorganic particles may be 100 nm or less corresponding to the pore size of the porous polymer substrate. Therefore, it is possible to realize pore uniformity in the thickness direction of the separator.

As used herein, the term 'average particle diameter of the inorganic particles' means a D50 particle diameter, and 'D50 particle diameter' means a particle diameter at a point of 50% in the accumulated particle number distribution depending on particle diameter. The particle diameter may be determined by using a laser diffraction method. Particularly, a powder to be analyzed is dispersed in a dispersion medium and introduced to a commercially available laser diffraction particle size analyzer (e.g. Microtrac S3500), and then a difference in diffraction pattern depending on particle size is determined, when particles pass through laser beams, and then particle size distribution is calculated. Then, the particle diameter at a point of 50% of the particle number accumulated distribution depending on particle diameter is calculated to determine D50. The average particle diameter may refer to the average particle diameter of primary particles.

According to an embodiment of the present disclosure, the inorganic particles may include fumed inorganic particles.

As used herein, fumed inorganic particles refer to inorganic particles which form secondary particles through the interconnection thereof by the collision of elementary particles formed by hydrolysis in a flame at 1,000°C or higher, wherein the secondary particles form three-dimensional aggregates (agglomerates).

When the inorganic particles include fumed inorganic particles, it is easy to form inorganic particles having a BET specific surface area of 50-150 m$^2$/g.

In addition, when the inorganic particles include fumed inorganic particles, it is easy to form inorganic particles having an average particle diameter (D50) of 20-47 nm based on primary particles.

Particular examples of the fumed inorganic particles may include fumed alumina, fumed silica, fumed titanium dioxide, or two or more of them.

According to an embodiment of the present disclosure, the binder polymer may include polyvinylidene fluoride, polyvinylidene fluoride-co-hexafluoropropylene, polyvinylidene fluoride-co-chlorotrifluoroethylene, polyvinylidene fluoride-co-tetrafluoroethylene, polyvinylidene fluoride-co-trichloroethylene, acrylic copolymer , styrene-butadiene copolymer, polyacrylic acid, polymethyl methacrylate, polybutyl acrylate, polyacrylonitrile, polyvinyl pyrrolidone, polyvinyl alcohol, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, or two or more of them.

The acrylic copolymer may include, but is not limited to: ethyl acrylate-acrylic acid-N,N-dimethyl acrylamide copolymer, ethyl acrylate-acrylic acid-2-(dimethylamino)ethyl acrylate copolymer, ethyl acrylate-acrylic acid-N,N-diethylacrylamide copolymer, ethyl acrylate-acrylic acid-2-(diethylamino)ethyl acrylate copolymer, or two or more of them.

According to an embodiment of the present disclosure, the weight ratio of the inorganic particles to the binder polymer may be 50:50-99.5:0.5, or 70:30-97:3. When the weight ratio of the inorganic particles to the binder polymer satisfies the above-define range, it is possible to ensure sufficient vacant spaces formed among the inorganic particles, while ensuring sufficient adhesion among the inorganic particles. In addition, it is possible to bind the inorganic particles with ease, even when the inorganic particles have the above-defined range of BET specific surface area.

According to an embodiment of the present disclosure, the organic/inorganic composite porous layer may have a structure in which the inorganic particles are bound to one another by the binder polymer, while they are packed in contact with one another. In this manner, interstitial volumes are formed among the inorganic filler particles, and the interstitial volumes become vacant spaces to form pores.

According to an embodiment of the present disclosure, the organic/inorganic composite porous layer may have a pore size of 5-100 nm, or 10-90 nm. When the pore size of the organic/inorganic composite porous layer satisfies the above-defined range, the pore size of the organic/inorganic composite porous layer is one corresponding to the pore size of the porous polymer substrate. Therefore, it is possible to realize the pore uniformity with ease in the thickness direction. It is also possible to improve the self-discharge rate of a battery.

The pore size of the organic/inorganic composite porous layer may be determined by using the capillary flow porometry. The capillary flow porometry measures the diameter of the smallest pore in the thickness direction. Therefore, in order to determine the average pore size of the organic/inorganic composite porous layer alone by the capillary flow porometry, it is required to separate the organic/inorganic composite porous layer from the crosslinked structure-containing polyolefin porous substrate, and to surround the separated organic/inorganic composite porous layer with a nonwoven fabric capable of supporting the same. Herein, the non-woven fabric should have a significantly larger pore size as compare to the pore size of the organic/inorganic composite porous layer.

According to an embodiment of the present disclosure, the organic/inorganic composite porous layer may have a porosity of 5-95%, 10-95%, 20-90%, or 30-80%. The porosity corresponds to a value obtained by subtracting the volume expressed by the weight and density of each ingredient forming the organic/inorganic composite porous layer from the volume calculated from the thickness, width and length of the organic/inorganic composite porous coating layer.

The porosity of the organic/inorganic composite porous layer may be determined from scanning electron microscopic (SEM) images, by using a mercury porosimeter or capillary flow porosimeter, or through the BET6-point method based on nitrogen gas adsorption flow using a porosimetry analyzer (e.g. Belsorp-II mini, Bell Japan Inc.).

In the separator for a lithium secondary battery according to an embodiment of the present disclosure, the thickness of the organic/inorganic composite porous layer is larger than the thickness of the porous polymer substrate. When the thickness of the organic/inorganic composite porous layer is larger than the thickness of the porous polymer substrate, it is possible to prevent a short-circuit between a positive electrode and a negative electrode, or between an electrode and a nail, even though the nail penetrates through the organic/inorganic composite porous layer to cause damages upon the porous polymer substrate. Particularly, the inorganic particles contained in the organic/inorganic composite porous layer may surround the nail upon the nail penetration, and can prevent a direct short-circuit between materials having conductivity, for example, between a positive electrode and a negative electrode, or between an electrode and the nail.

According to an embodiment of the present disclosure, the organic/inorganic composite porous layer may have a thickness corresponding to 1.01 times or more, 1.09 times or more, 1.1 times or more, 1.5 times or more, 1.8 times or more, 2.2 times or more, 2.8 times or more, or 3 times or more, and 5 times or less, 3 times or less, 2.8 times or less, 2.2 times or less, 1.8 times or less, 1.5 times or less, 1.1 times or less, or 1.09 times or less, based on the thickness of the porous polymer substrate. When the thickness of the organic/inorganic composite porous layer satisfies the above-defined range, it is possible to easily prevent damages upon the porous polymer substrate caused by penetration of a nail through the organic/inorganic composite porous layer, and a short-circuit caused thereby, while maintaining the pore blocking effect derived from the porous polymer substrate. Particularly, when the thickness of the organic/inorganic composite porous layer is 1.1-3 times of the thickness of the porous polymer substrate, it is possible to easily prevent a short-circuit caused by a nail, while ensuring the mechanical strength of the porous polymer substrate.

According to an embodiment of the present disclosure, the organic/inorganic composite porous layer may have a thickness of 5-15 μm, 6-12 μm, or 7-10 μm. When the thickness of the organic/inorganic composite porous layer satisfies the above-defined range, it is possible to prevent the porous polymer substrate from being damaged by a nail penetrating through the thick organic/inorganic composite porous layer, and to prevent a decrease in battery capacity and an increase in resistance, caused by an excessively larger thickness of the separator.

Herein, the porous polymer substrate may have a thickness of 3 μm or more, 3.5 μm or more, 4.5 μm or more, 5 μm or more, 5.5 μm or more, 6.5 μm or more, or 9 μm or more, and 10 μm or less, 9 μm or less, 6.5 μm or less, 5.5 μm or less, 5 μm or less, 4.5 μm or less, or 3.5 μm or less. When the thickness of the porous polymer substrate satisfies the above-defined range, it is possible to maintain a pore blocking effect derived from the porous polymer substrate, while preventing the problem of damages upon the separator during the use of a battery. It is also possible to prevent a decrease in battery capacity and an increase in resistance, caused by an excessively larger thickness of the separator.

According to an embodiment of the present disclosure, when the organic/inorganic composite porous layer is disposed on both surfaces of the porous polymer substrate, the thickness of the organic/inorganic composite porous layer corresponds to the sum of the organic/inorganic composite porous layers each disposed on one surface of the porous polymer substrate.

According to the present disclosure, the thickness of the organic/inorganic composite porous layer may be calculated by subtracting the thickness of the porous polymer substrate from the average value of the thickness values measured at 9 positions of a sample.

According to an embodiment of the present disclosure, the weight of the organic/inorganic composite porous layer may be 50-99 wt%, or 70-90 wt% based on the total weight of the separator. When the weight of the organic/inorganic composite porous layer satisfies the above-defined range, it is possible to prevent damages upon the porous polymer substrate, caused by penetration of a nail through the organic/inorganic composite porous layer, by virtue of a high proportion of the organic/inorganic composite porous layer in the separator, and to prevent a short-circuit caused thereby.

The weight of the organic/inorganic composite porous layer may be determined by subtracting the weight of the porous polymer substrate from the total weight of the separator.

According to an embodiment of the present disclosure, the surface of the organic/inorganic composite porous layer may have an arithmetic mean roughness (Ra) of 100-500 nm. For example, the surface of the organic/inorganic composite porous layer may have an arithmetic mean roughness of 150 nm or more, 210 nm or more, 230 nm or more, 350 nm or more, 355 nm or more, or 390 nm or more, and 420 nm or less, 390 nm or less, 355 nm or less, 350 nm or less, 230 nm or less, or 210 nm or less. When the arithmetic mean roughness of the surface of the organic/inorganic composite porous layer satisfies the above-defined range, the organic/inorganic composite porous layer has a uniform thickness to minimize the interfacial resistance between an electrode and the separator and to allow uniform lithium ion transport during charge/discharge, thereby providing a battery with improved life characteristics.

When the arithmetic mean roughness of the surface of the organic/inorganic composite porous layer is less than 100 nm, the pores of the organic/inorganic composite porous layer become narrow to cause the problem of an increase in resistance.

When the arithmetic mean roughness of the surface of the organic/inorganic composite porous layer is larger than 500 nm, the pores of the organic/inorganic composite porous layer become significantly large, thereby facilitating current leakage. In this case, there is a problem of self-discharge.

As used herein, the term 'arithmetic mean roughness' refers to a roughness curve expressed by the following Formula 1, when a reference length of L is extracted in the mean line direction of the roughness curve in the roughness distribution of the surface determined sequentially from the start point, as depicted hereinbelow, the mean line direction is taken as x axis, and the height direction is taken as Y axis.

[Formula 1]

$$R_a = \frac{1}{L}\int_0^L |f(x)|dx$$

For example, the arithmetic mean roughness may be determined by using an optical profiler (NV-2700) available from Nano System.

The separator for a lithium secondary battery according to an embodiment of the present disclosure has excellent heat resistance, and thus may not be broken even at 190°C, which is significantly higher than the meltdown temperature of the conventional separator.

According to an embodiment of the present disclosure, the separator has excellent heat resistance, and thus may show a heat shrinkage of 10% or less, 0.1-10%, 0.2-7%, or 0.5-3%, each in the machine direction (MD) and the transverse direction (TD), as measured after allowing the separator to stand at 190°C for 1 hour.

According to an embodiment of the present disclosure, the separator includes inorganic particles having a BET specific surface area of 50-150 m$^2$/g to facilitate light scattering and includes a porous polymer substrate to cause a shutdown phenomenon. On the other hand, the separator is not broken at 190°C, and thus may show a ratio of the light transmission after being allowed to stand at 25°C for 1 hour based on the light transmission after being allowed to stand at 190°C for 1 hour of 1.2 or more, 2.0 or more, 1.2-20.0, or 2.0-20.0.

The light transmission may be determined by using a UV-Vis spectrometer capable of analysis in a wavelength range of 190-900 nm.

According to an embodiment of the present disclosure, the separator may have a total thickness of 8-25 μm, 11-21 μm, or 13-19 μm. When the thickness of the separator satisfies the above-defined range, it is possible to improve the safety, while preventing a decrease in battery capacity and an increase in resistance, caused by an excessively large thickness of the separator.

The separator for a lithium secondary battery according to an embodiment of the present disclosure may be obtained by the following method, but is not limited thereto.

In another aspect of the present disclosure, there is provided a method for manufacturing a separator for a lithium secondary battery, including the steps of:

preparing a porous polymer substrate;
coating a slurry for forming an organic/inorganic composite porous layer containing inorganic particles having a BET specific surface area of 50-150 m$^2$/g and a binder polymer on at least one surface of the porous polymer substrate, followed by drying, to form an organic/inorganic composite porous layer having a larger thickness than the thickness of the porous polymer substrate.

Reference will be made to the above description about the porous polymer substrate. The porous polymer substrate may be obtained from the above-mentioned materials by forming pores therein through a conventional process known to those skilled in the art for ensuring high air permeability and porosity, such as a wet process using a solvent, a diluent or a pore forming agent or a dry process based on stretching .

Reference will be made to the above description about the inorganic particles and the binder polymer.

The slurry for forming an organic/inorganic composite porous layer may be prepared by dissolving or dispersing the binder polymer in a solvent for the binder polymer, adding the inorganic particles thereto and dispersing them therein. However, the method for preparing the slurry is not limited thereto.

The solvent for the binder polymer may function as a solvent capable of dissolving the binder polymer, or as a dispersion medium not capable of dissolving the binder polymer but capable of dispersing the binder polymer.

According to an embodiment of the present disclosure, the solvent for the binder polymer may include N-methyl-2-pyrrolidone, acetone, methyl ethyl ketone, dimethylformamide, dimethylacetamide, methanol, ethanol, isopropyl alcohol, or two or more organic solvents of them, or water.

The slurry for forming an organic/inorganic composite porous layer may be coated on at one surface of the porous polymer substrate. Non-limiting examples of the method for coating the slurry include dip coating, die coating, roll coating, comma coating, microgravure coating, doctor blade coating, reverse roll coating, Mayer bar coating, direct roll coating, or the like.

According to an embodiment of the present disclosure, the method may further include a step of carrying out phase separation by using a non-solvent for the binder polymer in a conventional manner known to those skilled in the art, after the slurry for forming an organic/inorganic composite porous layer is coated on at least one surface of the porous polymer substrate. The phase separation step may be carried out in order to form a pore structure in the organic/inorganic composite porous layer.

The coated slurry may be dried by using a conventional drying method used in the manufacture of a separator. For example, the coated slurry may be dried by using air for 10 seconds to 30 minutes, 30 seconds to 20 minutes, or 3-10 minutes. When the drying time is within the above-defined range, it is possible to remove the residual solvent, while not adversely affecting the productivity.

The above-described separator for a lithium secondary battery may be interposed between a positive electrode and a negative electrode to obtain a lithium secondary battery.

The lithium secondary battery may include a lithium metal secondary battery, a lithium-ion secondary battery, a lithium polymer secondary battery, a lithium-ion polymer secondary battery, or the like.

The electrodes used in combination with the separator according to the present disclosure are not particularly limited, and may be obtained by allowing an electrode active material layer containing an electrode active material, a conductive material and a binder to be bound to an electrode current collector through a method generally known in the art. Among the electrode active materials, non-limiting examples of the positive electrode active material include, but are not limited to: layered compounds, such as lithium cobalt oxide ($LiCoO_2$) and lithium nickel oxide ($LiNiO_2$), or those compounds substituted with one or more transition metals; lithium manganese oxides such as those represented by the chemical formula of $Li_{1+x}Mn_{2-x}O_4$ (wherein x is 0-0.33), $LiMnO_3$, $LiMn_2O_3$ and $LiMnO_2$; lithium copper oxide ($Li_2CuO_2$); vanadium oxides such as LiVsOs, $LiV_3O_4$, $V_2O_5$ or $Cu_2V_2O_7$; Ni-site type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1) or $Li_2Mn_3MO_8$ (wherein M is Fe, Co, Ni, Cu or Zn); $LiMn_2O_4$ in which Li is partially substituted with an alkaline earth metal ion; disulfide compounds; $Fe_2(MoO_4)_3$; or the like.

Non-limiting examples of the negative electrode active material include conventional negative electrode active materials that may be used for the negative electrodes for conventional electrochemical devices. Particularly, lithium-intercalating materials, such as lithium metal or lithium alloys, carbon, petroleum coke, activated carbon, graphite or other carbonaceous materials, may be used.

Non-limiting examples of the positive electrode current collector include foil made of aluminum, nickel or a combination thereof. Non-limiting examples of the negative electrode current collector include foil made of copper, gold, nickel, copper alloys or a combination thereof.

According to an embodiment of the present disclosure, the conductive material used in each of the negative electrode and the positive electrode may be added in an amount of 1-30 wt% based on the total weight of the active material layer. The conductive material is not particularly limited, as long as it causes no chemical change in the corresponding battery and has conductivity. Particular examples of the conductive material include: graphite, such as natural graphite or artificial graphite; carbon black, such as acetylene black, Ketjen black, channel black, furnace black, lamp black or thermal black; conductive fibers, such as carbon fibers or metallic fibers; fluorocarbon; metal powder, such as aluminum or nickel powder; conductive whisker, such as zinc oxide or potassium titanate; conductive metal oxide, such as titanium oxide; conductive materials, such as polyphenylene derivatives, or the like.

According to an embodiment of the present disclosure, the binder used in each of the negative electrode and the positive electrode independently is an ingredient which assists binding between the active material and the conductive material and binding to the current collector. In general, the binder may be added in an amount of 1-30 wt% based on the total weight of the active material layer. Particular examples of the binder include polyvinylidene fluoride (PVDF), polyacrylic acid (PAA), polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylenepropylene-diene terpolymer (EPDM), sulfonated EPDM, styrene-butadiene rubber, fluoro-rubber, various copolymers, or the like.

According to an embodiment of the present disclosure, the lithium secondary battery includes an electrolyte, which may include an organic solvent and a lithium salt. In addition, the electrolyte may include an organic solid electrolyte or an inorganic solid electrolyte.

Particular examples of the organic solvent include aprotic organic solvents, such as N-methyl-2-pyrrolidone, ethylene carbonate, propylene carbonate, butylene carbonate, dimethyl carbonate, diethyl carbonate, γ-butyrolactone, 1,2-dimethoxyethane, tetrahydrofuran , 2-methyl tetrahydrofuran, dimethyl sulfoxide, 1,3-dioxolan, formamide, dimethyl formamide, dioxolan, acetonitrile, nitromethane, methyl formate, methyl acetate, triphosphate, trimethoxymethane, dioxolan derivatives, sulfolane , methyl sulfolane , 1,3-dimethyl-2-imidazolidione, propylene carbonate derivatives, tetrahydrofuran derivatives, ethers, methyl propionate, ethyl propionate, or the like.

The lithium salt is a material which can be dissolved in the non-aqueous electrolyte with ease, and particular examples thereof include LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, lithium chloroborane , lithium lower aliphatic carboxylate, lithium tetraphenyl borate, imide, or the like.

In addition, the electrolyte may further include pyridine, triethyl phosphite, triethanolamine, cyclic ethers, ethylene diamine, n-glyme, triamide hexaphosphate, nitrobenzene derivatives, sulfur, quinone imine dyes, N-substituted oxazolidinone, N,N-substituted imidazolidine, ethylene glycol dialkyl ether, ammonium salt, pyrrole, 2-methoxyethaol and aluminum trichloride in order to improve the charge/discharge characteristics, flame resistance, or the like. Optionally, the electrolyte may further include a halogen-containing solvent, such as carbon tetrachloride or trifluoroethylene, in order to impart non-combustibility. The electrolyte may further include carbon dioxide gas in order to improve the high-temperature storage characteristics.

Particular examples of the organic solid electrolyte may include polyethylene derivatives, polyethylene oxide derivatives, polypropylene oxide derivatives, phosphate polymer, polyagitation lysine, polyester sulfide, polyvinyl alcohol, polyvinylidene fluoride, polymers containing an ionically dissociable group, or the like.

Particular examples of the inorganic solid electrolyte may include nitrides, halides and sulfates of Li, such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH and $Li_3PO_4$-$Li_2S$-$SiS_2$.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

According to an embodiment of the present disclosure, the process for applying the electrode assembly to the battery may include lamination (stacking) and folding of the separator with electrodes, besides a conventional process, winding.

According to an embodiment of the present disclosure, the separator for a lithium secondary battery may be interposed between the positive electrode and the negative electrode of the lithium secondary battery. When an electrode assembly is formed by assembling a plurality of cells or electrodes, the separator may be interposed between the adjacent cells or electrodes. The electrode assembly may have various structures, such as a simple stack type, a j elly-roll type, a stacked-folded type, a laminated-stacked type, or the like.

MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

**Example 1**

First, water was used as a solvent, fumed alumina (Evonik Co, Alu 65, BET specific surface area: 65 $m^2$/g, average particle diameter (D50) of primary particles: 24 nm) was used as inorganic particles, citric acid was used as a dispersant, and acrylic water-dispersed emulsion (Toyo Ink Co., CSB-130) was used as a binder polymer, and the materials were mixed at a weight ratio of 96:1:3 to prepare a slurry for forming an organic/inorganic composite porous layer. The slurry for forming an organic/inorganic composite porous layer had a solid content of 40%.

A polyolefin porous film (Asahi Co., ND506, thickness: 5.5 $\mu$m) was prepared as a porous polymer substrate, and the slurry for forming an organic/inorganic composite porous layer was coated on both surfaces of the porous polymer substrate through a dip coating process and dried at 60°C for 3 minutes to obtain a separator.

Herein, each organic/inorganic composite porous layer formed on one surface of the porous polymer substrate had a thickness of 5 $\mu$m, and the total thickness of the organic/inorganic composite porous layers formed on both surfaces of the porous polymer substrate was 10 $\mu$m.

**Example 2**

A separator was obtained in the same manner as Example 1, except that the inorganic particles were changed into fumed alumina (Cabot Co., FA51, BET specific surface area: 51 $m^2$/g, average particle diameter (D50) of primary particles: 23 nm).

Herein, each organic/inorganic composite porous layer formed on one surface of the porous polymer substrate had a thickness of 5.0 $\mu$m, and the total thickness of the organic/inorganic composite porous layers formed on both surfaces of the porous polymer substrate was 10.0 $\mu$m.

**Example 3**

A separator was obtained in the same manner as Example 1, except that the porous polymer substrate was changed into a polyolefin porous film (Senior Co., SW506, thickness: 6.5 $\mu$m).

Herein, each organic/inorganic composite porous layer formed on one surface of the porous polymer substrate had a thickness of 5.0 $\mu$m, and the total thickness of the organic/inorganic composite porous layers formed on both surfaces of the porous polymer substrate was 10.0 $\mu$m.

**Example 4**

A separator was obtained in the same manner as Example 1, except that the solid content of the slurry for forming an organic/inorganic composite porous layer was changed into 25%.

Herein, each organic/inorganic composite porous layer formed on one surface of the porous polymer substrate had a thickness of 3.0 $\mu$m, and the total thickness of the organic/inorganic composite porous layers formed on both surfaces of the porous polymer substrate was 6.0 $\mu$m.

**Example 5**

A separator was obtained in the same manner as Example 1, except that the polyolefin porous film (Asahi Co., ND506, thickness: 5.5 $\mu$m) was further stretched at 123°C in the machine direction (MD) and in the transverse direction (TD) by 1.3 times in each direction to form a thin film having a final thickness of 3.5 $\mu$m, and the resultant thin film was used as a porous polymer substrate.

Herein, each organic/inorganic composite porous layer formed on one surface of the porous polymer substrate had a thickness of 5.0 $\mu$m, and the total thickness of the organic/inorganic composite porous layers formed on both surfaces of the porous polymer substrate was 10 $\mu$m.

**Example 6**

A separator was obtained in the same manner as Example 1, except that the slurry used in Example 1 was taken as the first slurry and applied to one surface of the porous polymer substrate, and the slurry prepared in the same manner as the first slurry, except that 90 wt% of the inorganic particles used in Example 1 were mixed with 10 wt% of pulverized alumina (DAEHAN Ceramics Co., Ltd., ALK-N1, BET specific surface area: 8.9 m$^2$/g, average particle diameter (D50) of primary particles: 280 nm), was taken as the second slurry, and the second slurry was applied sequentially to the other surface of the porous polymer substrate, through a micro-gravure process.

The total inorganic particles contained in the second slurry had a BET specific surface area of 56 m$^2$/g.

Herein, each organic/inorganic composite porous layer formed on one surface of the porous polymer substrate had a thickness of 5.0 $\mu$m, and the total thickness of the organic/inorganic composite porous layers formed on both surfaces of the porous polymer substrate was 10 $\mu$m.

**Example 7**

A separator was obtained in the same manner as Example 1, except that the polyolefin porous film (Senior Co., SW506, thickness: 6.5 $\mu$m) was further stretched at 123°C in the machine direction (MD) and in the transverse direction (TD) by 1.2 times in each direction to form a thin film having a final thickness of 4.5 $\mu$m, and the resultant thin film was used as a porous polymer substrate.

**Example 8**

A separator was obtained in the same manner as Example 1, except that 95 wt% of the inorganic particles used in Example 1 were mixed with 5 wt% of pulverized alumina (DAEHAN Ceramics Co., Ltd., ALK-N1, BET specific surface area: 8.9 m$^2$/g, average particle diameter of primary particles (D50): 280 nm) so that the total BET specific surface area of the inorganic particles might be 57 m$^2$/g.

Herein, each organic/inorganic composite porous layer formed on one surface of the porous polymer substrate had a thickness of 5.0 $\mu$m, and the total thickness of the organic/inorganic composite porous layers formed on both surfaces of the porous polymer substrate was 10 $\mu$m.

**Example 9**

A separator was obtained in the same manner as Example 1, except that the inorganic particles were changed into fumed alumina (Evonik Co., Alu130, BET specific surface area: 130 m$^2$/g, average particle diameter of primary particles: 20 nm).

Herein, each organic/inorganic composite porous layer formed on one surface of the porous polymer substrate had a thickness of 5.0 $\mu$m, and the total thickness of the organic/inorganic composite porous layers formed on both surfaces of the porous polymer substrate was 10 $\mu$m.

**Example 10**

A separator was obtained in the same manner as Example 1, except that 90 wt% of the inorganic particles used in Example 9 were mixed with 10 wt% of pulverized alumina (DAEHAN Ceramics Co., Ltd., ALK-N1, BET specific surface area: 8.9 m$^2$/g, average particle diameter of primary particles (D50): 280 nm) so that the total BET specific surface area of the inorganic particles might be 115 m$^2$/g.

Herein, each organic/inorganic composite porous layer formed on one surface of the porous polymer substrate had a thickness of 5.0 $\mu$m, and the total thickness of the organic/inorganic composite porous layers formed on both surfaces of the porous polymer substrate was 10 $\mu$m.

**Comparative Example 1**

A separator was obtained in the same manner as Example 4, except that a polyolefin porous film (Senior Co., SW309H, thickness: 9 $\mu$m) was used as a porous polymer substrate.

Herein, each organic/inorganic composite porous layer formed on one surface of the porous polymer substrate had a thickness of 3 $\mu$m, and the total thickness of the organic/inorganic composite porous layers formed on both surfaces of the porous polymer substrate was 6 $\mu$m.

**Comparative Example 2**

A separator was obtained in the same manner as Example 1, except that 40 wt% of the inorganic particles used in Example 9 were mixed with 60 wt% of pulverized alumina (DAEHAN Ceramics Co., Ltd., ALK-N1, BET specific surface area: 8.9 m$^2$/g, average particle diameter of primary particles (D50): 280 nm) so that the total BET specific surface area of the inorganic particles might be 58 m$^2$/g.

Herein, each organic/inorganic composite porous layer formed on one surface of the porous polymer substrate had a thickness of 5.0 $\mu$m, and the total thickness of the organic/inorganic composite porous layers formed on both surfaces of the porous polymer substrate was 10 $\mu$m.

**Comparative Example 3**

A separator was obtained in the same manner as Example 1, except that no porous polymer substrate was used, the slurry for forming an organic/inorganic composite porous layer was coated on one surface of a PET film treated with a release agent and having a thickness of 20 $\mu$m through a doctor blade coating process and dried at 80°C for 5 minutes to form an organic/inorganic composite porous layer having a thickness of 15 $\mu$m, and the organic/inorganic composite porous layer was peeled from the PET film.

**Comparative Example 4**

A separator was obtained in the same manner as Example 1, except that alumina (DAEHAN Ceramics Co., Ltd., ALK-N1, BET specific surface area: 8.9 m$^2$/g, average particle diameter of primary particles (D50): 280 nm) were used as inorganic particles.

**Comparative Example 5**

A separator was obtained in the same manner as Example 1, except that alumina (DAEHAN Ceramics Co., Ltd., ALK-N1, BET specific surface area: 8.9 m$^2$/g, average particle diameter of primary particles (D50): 280 nm) mixed with fumed alumina (Evonik Co., Alu65, BET specific surface area: 65 m$^2$/g, average particle diameter (D50) of primary particles: 24 nm) at a ratio of 50:50 were used as inorganic particles.

**Evaluation Example 1: Determination of Physical Properties of Separator**

The following Table 1 shows the thickness and weight of the porous polymer substrate, thickness and weight of the organic/inorganic composite porous layer, thickness of the organic/inorganic composite porous layer based on the total thickness of the separator, weight of the organic/inorganic composite porous layer based on the total weight of the separator, BET specific surface area of the organic/inorganic composite porous layer, average particle diameter (D50) of the inorganic particles, and the arithmetic mean roughness (Ra) of the surface of the organic/inorganic composite porous layer, in the separator according to each of Examples 1-10 and Comparative Examples 1-5.

(1) Thickness of Organic/Inorganic Composite Porous Layer

The thickness of the organic/inorganic composite porous layer was determined by subtracting the thickness of the porous polymer substrate from the average value of thickness of the separator measured at 9 positions of each sample.

(2) Determination of Weight of Organic/Inorganic Composite Porous Layer Based on Total Weight of Separator

The total weight of the separator was determined as average weight of 5 measurements of a sample having a unit area (5 cm x 5 cm), and the weight of the organic/inorganic composite porous layer was calculated by subtracting the weight of the porous polymer substrate, determined in the same manner as the total weight of the separator, from the total weight of the separator.

(3) Determination of BET Specific Surface Area

The BET specific surface area of inorganic particles was determined by the method of ASTM C1069.

(4) Arithmetic Mean Roughness (Ra) of Surface of Organic/Inorganic Composite Porous Layer

The arithmetic mean roughness (Ra) of the surface of the organic/inorganic composite porous layer was determined by using an optical profiler (NV-2700) available from Nano System Co. as follows.

A separator sample was taken in a square shape (5 cm (machine direction) x 5 cm (transverse direction)), the sample was disposed on a stage maintained at 23°C and set with a WSI filter, and then the arithmetic mean roughness of the surface was determined. Then, the arithmetic mean roughness of the surface was calculated through Nanomap program, the determination was repeated 5 times in the same manner as described above, and the intermediate value was suggested as a representative value.

[Table 1]

| | Thickness of porous polymer substrate (μm) | Thickness of organic/inorganic composite porous layer (μm) | Weight of porous polymer substrate per unit area (g/m²) | Weight of organic/inorganic composite porous layer (g) | Thickness of organic/inorganic composite layer based on total thickness of separator (%) | Weight of organic/inorganic composite layer based on total weight of separator (%) | BET (one surface/the other surface) | Average particle diameter (D50) (one surface/the other surface) | Ra (one surface/the other surface) |
|---|---|---|---|---|---|---|---|---|---|
| Ex. 1 | 5.5 | 10 | 3.0 | 18.0 | 64.5 | 85.6 | 65/65 | 24 | 230/230 |
| Ex. 2 | 5.5 | 10 | 3.0 | 18.0 | 64.5 | 85.6 | 51/51 | 23 | 220/220 |
| Ex. 3 | 6.5 | 10 | 3.6 | 18.0 | 60.6 | 83.4 | 65/65 | 24 | 230/230 |
| Ex. 4 | 5.5 | 6 | 3.0 | 10.8 | 52.2 | 78.1 | 65/65 | 24 | 230/230 |
| Ex. 5 | 3.5 | 10 | 1.9 | 18.0 | 74.1 | 90.3 | 65/65 | 24 | 230/230 |
| Ex. 6 | 5.5 | 10 | 3.0 | 18.0 | 64.5 | 85.6 | 65/56 | 24/48 | 230/420 |
| Ex. 7 | 4.5 | 10 | 2.5 | 18.0 | 69.0 | 87.9 | 65/65 | 24 | 230/230 |
| Ex. 8 | 5.5 | 10 | 3.0 | 18.0 | 64.5 | 85.6 | 57/57 | 39 | 390/390 |
| Ex. 9 | 5.5 | 10 | 3.0 | 18.0 | 64.5 | 85.6 | 130/130 | 20 | 210/210 |
| Ex. 10 | 5.5 | 10 | 3.0 | 18.0 | 64.5 | 85.6 | 115/115 | 47 | 355/355 |
| Comp. Ex. 1 | 9 | 6 | 4.9 | 10.8 | 40.0 | 68.6 | 65/65 | 24 | 230/230 |
| Comp. Ex. 2 | 5.5 | 10 | 3.0 | 18.0 | 64.5 | 85.6 | 58/58 | 170 | 870/870 |
| Comp. Ex. 3 | 0 | 15 | 0 | 27 | 100 | 100 | 65/65 | 24 | 230/230 |
| Comp. Ex. 4 | 5.5 | 10 | 3.0 | 18.0 | 64.5 | 85.6 | 8.9/8.9 | 280 | 610/610 |
| Comp. Ex. 5 | 5.5 | 10 | 3.0 | 18.0 | 64.5 | 85.6 | 38/38 | 128 | 760/760 |

**Evaluation Example 2: Determination of Safety of Separator**

The following Table 2 shows the heat shrinkage at 190°C in the machine direction (MD) and the transverse direction (TD), nail penetration safety, overcharge safety and Hi-pot test results of the separator according to each of Examples 1-10 and Comparative Examples 1-5.

With reference to the results of nail penetration safety and overcharge safety results, 'o' represents ignition of the battery and 'x' represents no ignition.

(1) Heat Shrinkage at 190°C in Machine Direction (MD) and Transverse Direction (TD)

The heat shrinkage of the separator according to each of Examples 1-10 and Comparative Examples 1-5 at 190°C in the machine direction (MD) and the transverse direction (TD) was determined by cutting the separator according to each of Examples 1-10 and Comparative Examples 1-5 into a square shape with a size of MD 10 cm x TD 10 cm, allowing the separator sample to stand in a constant-temperature oven maintained at 190°C, and measuring a change in length by using a ruler.

(2) Determination of Nail Penetration Safety

The separator according to each of Examples 1-10 and Comparative Examples 1-5 was used to manufacture a lithium secondary battery, the lithium secondary battery was fully charged under a voltage of 4.2 V, a nail having a diameter of 2.5 mm was allowed to penetrate through the center of the battery, and occurrence of the battery ignition or not was observed. Herein, 'o' represents ignition of the battery and 'x' represents no ignition.

The lithium secondary battery was obtained as follows.

Manufacture of Negative Electrode

Artificial graphite (Shanshan Co., QCG-X) as a negative electrode active material, denka black (carbon black) as a conductive material and water-dispersed emulsion (Zeon Co., BM-L301) as a binder, and CMC (Daicel Co., 2200) as a dispersant were mixed at a weight ratio of 96.0:0.2:1.2:2.3, and water was added thereto as a solvent to prepare a negative electrode slurry.

The negative electrode slurry was coated on a copper current collector at a loading amount of 3.8 mAh/cm$^2$, followed by drying, to obtain a negative electrode.

Manufacture of Positive Electrode

LiNi$_{0.8}$Co$_{0.1}$Mn$_{0.1}$O$_2$ as a positive electrode active material, denka black as a conductive material and polyvinylidene fluoride (PVDF) as a binder were added to N-methyl-2-pyrrolidone (NMP) as a solvent at a weight ratio of 96:2:2 to prepare a positive electrode active material slurry. The positive electrode active material slurry was coated on a sheet-like aluminum current collector, followed by drying, to form a positive electrode active material layer with a final positive electrode loading amount of 3.4 mAh/cm$^2$.

Manufacture of Lithium Secondary Battery

The separator according to each of Examples and Comparative Examples was interposed between the negative electrode and the positive electrode obtained as described above, and a non-aqueous electrolyte (1 M LiPF$_6$, ethylene carbonate (EC)/propylene carbonate (PC)/diethyl carbonate (DEC), volume ratio 3:3:4) was injected thereto to obtain a lithium secondary battery.

(3) Determination of Overcharge Safety

The separator according to each of Examples 1-10 and Comparative Examples 1-5 was used to manufacture a lithium secondary battery, the lithium secondary battery was fully charged under a voltage of 4.2 V, and the fully charged battery was charged at room temperature in a constant-current mode of 0.2 C and continuously charged until the voltage reached 8.5 V or the charge capacity reached 200% of the designed capacity. In this manner, the overcharge safety of the battery was determined. Herein, 'o' represents a battery satisfying overcharge safety, and 'x' represents a battery not satisfying overcharge safety.

The lithium secondary battery was obtained in the above-described manner.

(4) Hi-pot Test

A conductive plate was installed at the top and bottom of the separator sample according to each of Examples 1-10 and Comparative Examples 1-5. The results are shown in the following Table 2, wherein 'o' represents that no electric current flows, and 'x' represents that electric current flows, at 1000 V under the ramp-on condition.

[Table 2]

| | Heat shrinkage of separator at 190°C | | Nail penetration safety | Overcharge safety | Hi-pot test |
|---|---|---|---|---|---|
| | MD | TD | | | |
| Ex. 1 | 0.8 | 1.0 | ○ | ○ | ○ |
| Ex. 2 | 0.9 | 1.1 | ○ | ○ | ○ |
| Ex. 3 | 1.2 | 1.5 | ○ | ○ | ○ |
| Ex. 4 | 2.1 | 2.8 | ○ | ○ | ○ |
| Ex. 5 | 0.7 | 0.8 | ○ | ○ | ○ |
| Ex. 6 | 1.3 | 1.5 | ○ | ○ | ○ |
| Ex. 7 | 0.9 | 1 | ○ | ○ | ○ |
| Ex. 8 | 1.4 | 1.8 | ○ | ○ | ○ |
| Ex. 9 | 0.8 | 0.9 | ○ | ○ | ○ |
| Ex. 10 | 1.1 | 1.3 | ○ | ○ | ○ |
| Comp. Ex. 1 | 53.2 | 55.1 | x | ○ | ○ |
| Comp. Ex. 2 | 53.3 | 54.2 | x | x | x |
| Comp. Ex. 3 | 0.3 | 0.3 | ○ | x | x |
| Comp. Ex. 4 | 60.1 | 65.2 | x | x | x |
| Comp. Ex. 5 | 45.2 | 48.2 | x | ○ | ○ |

As can be seen from Table 2, the separator according to each of Examples 1-10 shows excellent results in terms of heat shrinkage at 190°C in the machine direction and the transverse direction, nail penetration safety, overcharge safety and Hi-pot test results.

On the other hand, it can be seen that the separator according to Comparative Example 1 cannot ensure nail penetration safety due to the thickness of the organic/inorganic composite porous layer smaller than the thickness of the porous polymer substrate. In addition, the separator shows a poor heat shrinkage at 190°C in the machine direction and the transverse direction.

It can be seen that the separator according to Comparative Example 2 cannot ensure the condition of the arithmetic mean roughness of the surface of the organic/inorganic composite porous layer, i.e. 100-500 nm, and thus cannot ensure nail penetration safety and overcharge safety and cannot pass the Hi-pot test. In addition, the separator shows a poor heat shrinkage at 190°C in the machine direction and the transverse direction.

It can be seen that the separator according to Comparative Example 3 includes no porous polymer substrate, and thus cannot ensure overcharge safety, and cannot pass the Hi-pot test.

Each of the separators according to Comparative Examples 4 and 5 uses inorganic particles having a BET specific surface area of less than 50 $m^2/g$, and thus cannot ensure nail penetration safety, and shows a poor heat shrinkage at 190°C in the machine direction and the transverse direction.

**Claims**

1. A separator for a lithium secondary battery comprising:

    a porous polymer substrate; and
    an organic/inorganic composite porous layer disposed on at least one surface of the porous polymer substrate and comprising inorganic particles and a binder polymer,
wherein the inorganic particles have a BET specific surface area of 50-150 m$^2$/g, the organic/inorganic composite porous layer has a thickness larger than the thickness of the porous polymer substrate, and the surface of the organic/inorganic composite porous layer has an arithmetic mean roughness of 100-500 nm.

2. The separator for a lithium secondary battery according to claim 1, wherein the inorganic particles have a BET specific surface area of 50-130 m$^2$/g.

3. The separator for a lithium secondary battery according to claim 1, wherein the inorganic particles have a BET specific surface area of 50-75 m$^2$/g.

4. The separator for a lithium secondary battery according to claim 1, wherein the surface of the organic/inorganic composite porous layer has an arithmetic mean roughness of 150-350 nm.

5. The separator for a lithium secondary battery according to claim 1, wherein the thickness of the organic/inorganic composite porous layer is 1.01-5 times of the thickness of the porous polymer substrate.

6. The separator for a lithium secondary battery according to claim 1, wherein the thickness of the organic/inorganic composite porous layer is 1.01-3 times of the thickness of the porous polymer substrate.

7. The separator for a lithium secondary battery according to claim 1, wherein the inorganic particles have an average particle diameter (D50) of 20-47 nm.

8. The separator for a lithium secondary battery according to claim 1, wherein the inorganic particles have an average particle diameter (D50) of 23-30 nm.

9. The separator for a lithium secondary battery according to claim 1, wherein the inorganic particles include fumed inorganic particles.

10. The separator for a lithium secondary battery according to claim 9, wherein the inorganic particles include fumed alumina, fumed silica, fumed titanium dioxide, or two or more of them.

11. The separator for a lithium secondary battery according to claim 1, wherein the organic/inorganic composite porous layer has a thickness of 5-15 $\mu$m.

12. The separator for a lithium secondary battery according to claim 1, wherein the porous polymer substrate has a thickness of 3-10 $\mu$m.

13. The separator for a lithium secondary battery according to claim 1, wherein the separator has a total thickness of 8-25 $\mu$m.

14. The separator for a lithium secondary battery according to claim 1, wherein the weight ratio of the inorganic particles to the binder polymer is 50:50-99.5:0.5.

15. The separator for a lithium secondary battery according to claim 1, wherein the weight ratio of the inorganic particles to the binder polymer is 70:30-97:3.

16. The separator for a lithium secondary battery according to claim 1, wherein the organic/inorganic composite porous layer has a weight of 50-99 wt% based on the total weight of the separator.

17. The separator for a lithium secondary battery according to claim 1, wherein the separator shows a ratio of the light transmission after being allowed to stand at 25°C for 1 hour based on the light transmission after being allowed to stand at 190°C for 1 hour of 1.2 or more.

18. The separator for a lithium secondary battery according to claim 1, wherein the separator shows a heat shrinkage of 10% or less, each in the machine direction (MD) and the transverse direction (TD), as measured after allowing the separator to stand at 190°C for 1 hour.

**19.** A lithium secondary battery which comprises an electrode assembly comprising a positive electrode, a negative electrode and a separator interposed between the positive electrode and the negative electrode, wherein the separator is the same as defined in any one of claims 1 to 18.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210010310